# EUROPEAN PATENT SPECIFICATION

(11) **EP 3 584 669 B1**
(45) Date of publication and mention of the grant of the patent: **20.09.2023**
(21) Application number: 18906706.9
(22) Date of filing: 09.05.2018
(51) Int. Cl.: G06F 16/957, H04L 61/4511

(54) **WEBPAGE LOADING METHOD, WEBPAGE LOADING SYSTEM, AND SERVER**
VERFAHREN ZUM LADEN EINER WEBSEITE, SYSTEM ZUM LADEN EINER WEBSEITE UND SERVER
PROCÉDÉ DE CHARGEMENT DE PAGE WEB, SYSTÈME DE CHARGEMENT DE PAGE WEB ET SERVEUR

(30) Priority: 25.04.2018 CN 201810380726
(43) Date of publication of application: 25.12.2019
(73) Proprietor: Wangsu Science & Technology Co., Ltd., Shanghai 200030 (CN)
(72) Inventor: HAN, Tiantian, Shanghai 200030 (CN); LI, Chen, Shanghai 200030 (CN); HUANG, Kewei, Shanghai 200030 (CN)
(74) Representative: de Arpe Fernandez, Manuel
(86) International application number: PCT/CN2018/086186
(87) International publication number: WO 2019/205192

(56) References cited:
- WO-A1-2009/135292
- WO-A2-2012/014209
- CN-A- 102 546 774
- CN-A- 103 631 905
- CN-A- 104 754 073
- CN-A- 106 341 417
- US-A1- 2015 193 398
- US-B1- 9 178 934
- Tim Ruffles: "How we made our page-load optimisations even faster", , 2 February 2018 (2018-02-02), pages 1-15, XP055670211, Retrieved from the Internet: URL:https://blog.cloudflare.com/making-pag e-load-even-faster/ [retrieved on 2020-02-19]
- Anonymous: "onerror Event", , 24 April 2018 (2018-04-24), pages 1-5, XP055670220, Retrieved from the Internet: URL:https://web.archive.org/web/2018042405 3937/https://www.w3schools.com/jsref/event _onerror.asp [retrieved on 2020-02-19]

## Description

### FIELD OF DISCLOSURE

The present disclosure generally relates to the field of Internet technology and, more particularly, relates to a webpage access acceleration technology.

### BACKGROUND

A script is an extension of a batch file and a program saved in plain text. In general, a computer script program is a combination of a determined series of events that control a computer to run arithmetic operations, in which certain logic branches may be implemented. A webpage comprises multiple elements, such as HTML, JS (JavaScript), CSS (Cascading Style Sheet), and images. For a JS script to run in a browser, by default, when facing a JS script, the browser needs to stop and wait for the JS script to finish execution before the browser may finish the page painting. This means that the files are loaded and executed one by one, which affects the execution time of the browser. When the structure of a page is ill-designed and the JS script is positioned towards the beginning, the following problems will occur: slow loading of the first screen, inability to display pictures, extended display of the blank screen, and the poor user experience.

When JavaScript is running, webpage downloading and rendering must both stop and wait for the JS script to finish the execution. If the loading sequence is improper, it will cause the blockage of a large number of element requests, resulting in a longer time of page loading. In regard to the optimization of the sequence in loading the requests, the main approaches of the existing technologies include modifying the structure of a website, adjusting the loading sequence, and putting the script tags at the bottom of the pages, to increase the speed of displaying the pages to users. However, the applicants of the present disclosure have found at least the following problems in the existing technologies: although the above methods may theoretically optimize the speed of webpage access, in practice there are still compatibility problems. For instance, when displaying, some webpages may experience display errors, or even cannot display. However, these problems are often overlooked, and no further action has been taken to solve these problems.

The document WO 2009/135292 A1 discloses that an optimizer for messaging systems learns the purpose and context of each message and combines that information with knowledge of the specific client that will be rendering the response, such as a specific HTML browser. Any of a number of optimization factors can be applied, singly or in any combination. Messages are analyzed offline until a configurable threshold is reached, indicating that enough data has been sampled to develop a valid instruction set, to be applied to the responses that a server generates for a particular request. Responses are parsed into tokens and instructions for each type of token are compiled into instruction sets that are stored. These instructions sets continue to be iteratively improved as more data is collected, until the configurable sampling threshold is reached.

### BRIEF SUMMARY OF THE DISCLOSURE

The invention is set out in the appended set of claims. In the process of webpage loading optimization, optimize user experience, and facilitate promotion. At the same time, there is no need to modify the code of source stations, thereby reducing the technical development time for website owners.

Embodiments 4, 5, and 7 described below explain the invention.

Compared with the existing technologies, the difference and its consequential effects of the disclosed embodiments lie in that: in the existing technologies, after the front-end optimization function is enabled, the webpage may still not be properly displayed, or even not displayed at all, due to the compatibility problem of the browser. In the present disclosure, by detecting whether the to-be-loaded page is incorrectly loaded on the user terminal and by returning to the original page loading list, the optimized loading list is temporarily bypassed. This allows the user terminal to request the loading according to the original list, which expeditiously ensures that the webpage is displayed normally. In addition, since the embodiments of the present disclosure are implemented in the content delivery network, this creatively advances the well-accepted website optimization model in the field, without a need to change a user terminal configuration, change the code of a source station, or change the website platform of the source station for a to-be-visited webpage. The implementation is convenient, which reduces the technical development time for website owners while also providing a better web access experience from the user terminal side, thereby facilitating the promotion of the embodiments of the present disclosure. Overall, in the process of webpage loading optimization, the disclosed embodiments of the present disclosure optimize user experience, and facilitate promotion. At the same time, there is no need to modify the code of source stations, thereby reducing the technical development time for website owners.

### BRIEF DESCRIPTION OF THE DRAWINGS

The exemplary description of one or more embodiments will be made in detail with reference to the figures in the accompanying drawings. The exemplary description should not be constructed as limiting the disclosed embodiments. In the drawings, like reference numbers indicate like elements. Unless otherwise specified, figures in the accompanying drawings are not limited to the illustrated proportion.
FIG. 1 is a flowchart of a webpage loading method of Embodiment 1 according to some embodiments of the present disclosure;
FIG. 2 is a flowchart of a webpage loading method of Embodiment 3 according to some embodiments of the present disclosure;
FIG. 3 is a flowchart of a webpage loading method of Embodiment 4 according the invention.
FIG. 4 is a schematic diagram of one warning mechanism in a webpage loading method of Embodiment 3 according to some embodiments of the present disclosure;
FIG. 5 is a schematic diagram of another warning mechanism in a webpage loading method of Embodiment 3 according to some embodiments of the present disclosure;
FIG. 6 is a schematic diagram of yet another warning mechanism in a webpage loading method of Embodiment 3 according to some embodiments of the present disclosure;
FIG. 7 is a schematic structural diagram of a server of Embodiment 5 according to the invention; and
FIG. 8 is a schematic diagram of a webpage loading system of Embodiment 6 according to some embodiments of the present disclosure.

### DETAILED DESCRIPTION

To make the objectives, technical solutions, and advantages of the present disclosure clearer, specific embodiments of the present disclosure will be made in detail with reference to the accompanying drawings. Nonetheless, those skilled in the art will appreciate that, to provide a better understanding of the present disclosure, numerous technical details are presented in the embodiments of the present disclosure. However, even without these technical details and the modifications and variations made based on the various embodiments described as follows, the technical solutions that the present disclosure seeks to protect may still be implemented.

Embodiment 1 of the present disclosure relates to a webpage loading method.

The disclosed embodiment may be applied to a server, specifically, an edge server under the CDN architecture (e.g., an accelerated cloud platform). For an existing distributed computer system, the "content delivery network" or "CDN" is operated and managed by a service provider. The service provider typically provides content delivery service on behalf of a third party (such as a client) that uses the service provider infrastructure. This type of distributed system generally refers to a cluster of autonomous computers linked by one or more networks, but may also include software, systems, protocols, and technologies that are designed to facilitate a variety of services, such as content delivery, Web application acceleration, or other infrastructure on an original manufacturing site that supports outsourcing. A CDN service provider usually provides service delivery using digital attributes (such as a website), which are provided through a client portal and then deployed to the network. Digital assets are typically bound to one or more edge settings to allow a service provider to calculate traffic charges and charges for its clients. The above overlay network may be combined or interoperate with a front-end optimization (FEO) scheme. FEO is a process of accelerating a webpage by modifying the HTML and the resources thereon. The objective is to eliminate the bottleneck and inefficiency at the front end for a website that uses the overlay network. There are many specialized optimizations available in FEO that aim to achieve one or more of the following functions: reducing the number of HTTP requests required to load a webpage, but without downloading more data in a single request; reducing the overall size of a webpage and its elements by using a more efficient format, improving caching capacity, and removing unnecessary content; and accelerating webpage rendering by having a browser load elements in a different sequence or schedule, for instance, by preventing third-party scripts from delaying all other events on a page.

Specifically, in currently-known overlay network systems, a distributed computer system is configured as a CDN, and is assumed to contain a group of 1^2a - n machines that are distributed across the Internet. In general, most machines are servers located near the edge of the Internet, that is, located on or near a site where the end users connect to the network. The network operations command center (NOCC) manages the operations of various machines in the system. A third-party station/site, such as a website, offloads dispatched content (e.g. HTML, embedded page objects, streaming media, and software downloads) into the distributed computer system, particularly, the "edge" servers. Typically, a content provider offloads content transceiving by redirecting the alias (e.g., through DNS CNAME) of a domain or a subdomain of a given content provider to a domain managed under a service provider's prestigious domain name. The intention is to direct content end users to the distributed computer system to retrieve content more reliably and efficiently. Although not illustrated in detail, the distributed computing system may include other infrastructure, such as a distributed data collection system that collects usage and other data from the edge servers. The collected data is aggregated in an area or a group of areas, which is then transmitted to other backend systems to facilitate monitoring, logging, alerting, billing, managing, and other operational and management functions.

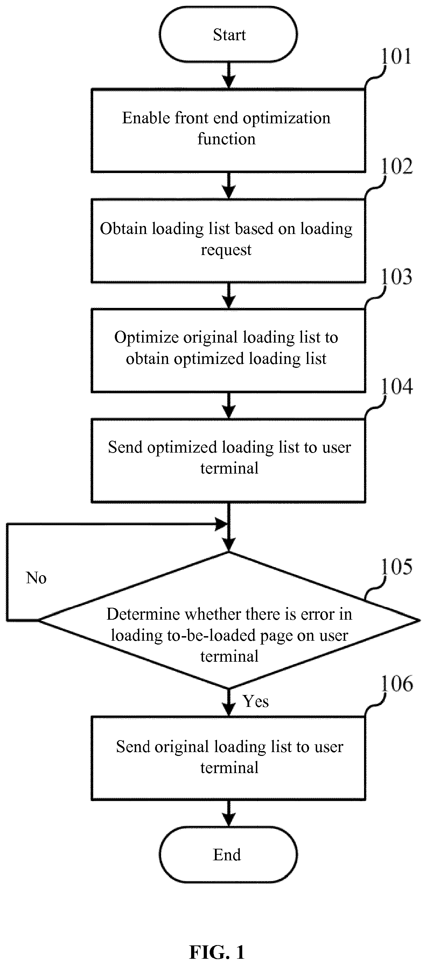

A flowchart of a webpage loading method of the present embodiment, as shown in FIG. 1, is illustrated as follows. The following embodiment is not according to the invention and are present for illustration purposes only.

Step 101: enable a front-end optimization function.

Specifically, at present, since the resources on a to-be-loaded page are loaded and executed one by one, this will affect the execution time of a browser. When the page structure is ill-designed and the JS scripts are positioned close to the beginning, the JS loading speed will affect the overall loading performance of the website. Especially when there are third-party JS files on the page, the loading speed becomes even less controllable. Therefore, a front end optimization function may be configured to optimize the loading process. One specific way to enable the front end optimization function may be automatic enablement.

Step 102: obtain an original loading list based on a loading request.

Specifically, in this step, when a page loading request from a user terminal is received, an original loading list for the to-be-loaded page is obtained based on the page loading request from the user terminal.

It should be noted that the page loading request may be issued when a user accesses a webpage through a browser, or when a user checks a page on an application (i.e., "APP").

It should be noted that a loading list (i.e., HTML document) includes a page's loading elements and the sequence in which the loading elements are loaded. At the same time, the loading list may be pre-stored on an edge server in the local. Even if the physical location of the server to which the webpage belongs is relatively far, the loading list may be still mirrored to the local in advance. Thereafter, when a page loading request is received, the pre-stored loading list may be directly fed back to the user terminal, to allow the user's browser to implement the subsequent events. In real applications, a loading list for a to-be-visited webpage may be not pre-stored in the local. In this case, a server may then request the loading list from the source station to which the webpage belongs, and feed back the requested loading list to the user terminal.

With respect to an edge server's processing of requests from user terminals, a detailed description is provided hereinafter with reference to a real application implementation. A customer (e.g., a user terminal) of an overlay network is provisioned to use FEO service by a customer portal, and CDN edge servers are provided with configuration data suggesting that FEO should be applicable to the customer's site (or some portions thereof). Next, a first user request (i.e., a page loading request) is received at the edge server. An edge server GHost (global host) process evaluates the configuration data of the request and determines that the request should use FEO. The Ghost process then looks up the normalization information for the digital asset in its cache of FEO configurations. In some embodiments, the GHost process employs RESTful requests to communicate with the FEO network, and the data is transferred to an API (such as the Google Protocol Buffers). The API responds to the request for normalization by performing a database lookup for the digital asset, and returns the normalization information. The response to the RESTful request is cached. Later, a second user request is received by the edge server Ghost process, which then analyzes the configuration data of the request and determines that the request should use FEO. The Ghost process then looks up the normalization information related to the customer. The normalization information is now present.

Step 103: optimize the original loading list to get an optimized loading list.

Specifically, this step rewrites the to-be-accelerated resources in the loading list according to predefined optimization schemes. Here, the predefined optimization schemes include at least one of the following: a desynchronization rewrite scheme, an acceleration rewrite scheme, and a blockage rewrite scheme. More specifically, a to-be-accelerated resource in a loading list is rewritten based on a predefined optimization scheme, where the predefined optimization scheme is determined according to a predefined strategy. Here, the predefined strategy may specify that all the to-be-accelerated resources use one certain optimization scheme, or different to-be-accelerated resources may be assigned with different optimization schemes. In addition, in real applications, besides the above three optimization schemes, based on needs, other optimization schemes may also be considered, the number and content of which are not limited here.

It should be noted that the optimization tools in the disclosed embodiment further include: adding a monitoring script to the original loading list, where the monitoring script is configured to, when detecting an error in loading the to-be-loaded page (e.g., the to-be-loaded page cannot display completely), send a loading error report to the edge server. In real applications, the content of a monitoring script may be written according to its function, details of which will not be provided here.

Step 104: send the optimized loading list to the user terminal.

Specifically, after receiving the rewritten loading list, the user terminal requests each resource according to the loading list.

Step 105: determine whether there is an error in loading the to-be-loaded page on the user terminal; if there is an error in loading the to-be-loaded page, proceed to Step 106; if there is no error in loading the to-be-loaded page, return to Step 105.

Specifically, the applicants of the present disclosure have found that, because the added front end optimization function may be incompatible with the scripts, the user terminal may not be able to request the optimized loading list normally, which causes an error in loading the to-be-loaded page. The page cannot be displayed completely, or even cannot be displayed at all.

The disclosed embodiment uses a monitoring script added to the original loading list to determine whether the to-be-loaded page is loaded incorrectly on the user terminal. More specifically, by checking whether a loading error report is received from the monitoring script, it may be determined whether the to-be-loaded page is loaded incorrectly on the user terminal. When a loading error report is received from the monitoring script, the to-be-loaded page is determined to be incorrectly loaded on the user terminal. In the real applications, if no loading error report is received from the monitoring script, the process returns to the determining Step 105 to repeat the determination process.

Step 106: send the original loading list to the user terminal.

Specifically, the original loading list sent in this step is the original loading list obtained in Step 102.

Compared with the existing technologies, the difference and its consequential effects of the disclosed embodiment lie in that: in the existing technologies, after the front-end optimization function is enabled, the webpage may still not be properly displayed, or even not displayed at all, due to the compatibility problem of the browser. In the present disclosure, by detecting whether the to-be-loaded page is incorrectly loaded on the user terminal and by returning to the original page loading list, the optimized loading list is temporarily bypassed. This allows the user terminal to request the loading according to the original list, which expeditiously ensures that the webpage is displayed normally. In addition, since the embodiments of the present disclosure are implemented in the content delivery network, this creatively advances the well-accepted website optimization model in the field, without a need to change a user terminal configuration, change the code of a source station, or change the website platform of the source station for a to-be-visited webpage. The implementation is convenient, which reduces the technical development time for website owners while also providing a better web access experience from the user terminal side, thereby facilitating the promotion of the embodiments of the present disclosure. Overall, in the process of webpage loading optimization, the disclosed embodiment optimizes user experience, and facilitates promotion. At the same time, there is no need to modify the code of the source stations, thereby reducing the technical development time for the website owners. More specifically, the disclosed embodiment monitors the page integrity by inserting a JS script into the edge server. When a reported error appears, the URL jumps to re-acquire a page that does not use the JS optimization function from the edge server.

Embodiment 2 of the present disclosure relates to a webpage loading method. Embodiment 2 is approximately the same as Embodiment 1, with the main difference and its consequential effects being: in Embodiment 1, an automatically executed monitoring script added to the original loading list is used to determine whether there is an error in page loading, while in the present embodiment, the number of loading requests sent by a user terminal is used to determine whether there is an error in page loading. Through monitoring the number of loading requests for the same loading item, a detection of page loading errors may be achieved simply and conveniently.

A flowchart of a webpage loading method consistent with the present embodiment is illustrated in FIG. 1. Here, when determining whether the to-be-loaded page is incorrectly loaded on the user terminal, Step 105 uses the number of loading requests for the same loading item from the user terminal under a first predefined period to determine whether there is an error in loading the to-be-loaded page on the user terminal.

Since a user may repeatedly issue loading requests when the page is loaded incorrectly on the user terminal side, if multiple loading requests for the same loading item are received from the same user terminal in a short time span, it may be determined that there is a loading error on the user terminal side.

Specifically, when the received loading request repeats reach a first predefined number, it is determined that there is a loading error. Here, the first predefined number may be two. Accordingly, after the edge server receives two repeated loading requests, the original loading list is fed back to the user terminal, to allow the user terminal to skip the optimized loading list as soon as possible, and use the original loading list to request each resource. This allows the user to get the normal page as soon as possible, and thus improves the user experience.

As can be seen, the disclosed embodiment specifies a method for determining whether a to-be-loaded page is incorrectly loaded on a user terminal, specifically, through counting the repeats of the received loading requests. This makes the determining process simple and feasible. In addition, a further limitation on the threshold of the loading request repeats allows the to-be-loaded page to be loaded as soon as possible, and the browser of the user terminal to leave the blank screen interface as soon as possible, thereby providing a better web-accessing experience for the user.

It should be noted that the method for determining the page loading errors in the present embodiment may be used in combination with the method for determining the page loading errors in Embodiment 1, details of which will not be provided here.

Embodiment 3 of the present disclosure relates to a webpage loading method. Embodiment 3 is further improved based on Embodiment 1, with the main improvement being: in Embodiment 3 of the present disclosure, a warning mechanism is added, which allows the situations with possible errors to be reported to the administrator after temporarily bypassing the front end optimization function, for better error-screening and troubleshooting.

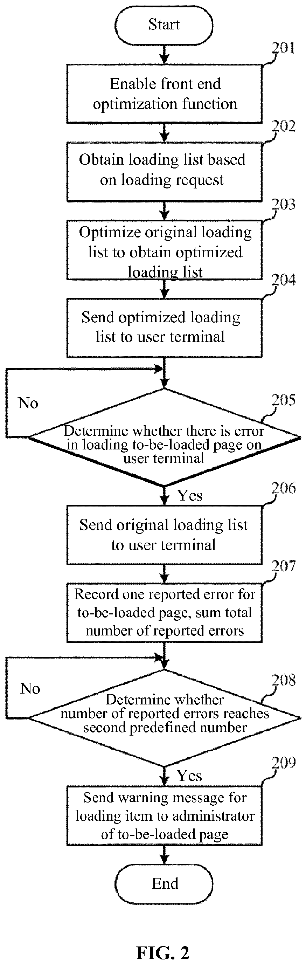

A flowchart of a webpage loading method of the present embodiment, as shown in FIG. 2, is illustrated as follows. The following embodiment is not according to the invention and are present for illustration purposes only.

Steps 201-206 in the disclosed embodiment are similar to Steps 101-106 in Embodiment 1, and will not be repeated again here.

Step 207: record a reported error for the to-be-loaded page, and sum the total number of reported errors.

That is, after recording reported errors, the number of reported errors for the loading item is monitored.

Step 208: determines whether the number of reported errors has reached a second predefined number; if the number of reported errors has reached the second predefined number, proceed to Step 209; if the number of reported errors has not reached the second predefined number, return to Step 208.

Specifically, the second predefined number may be five, the exact value of which is limited by the present disclosure.

Step 209: send a warning message regarding the loading item to an administrator for the to-be-loaded page.

Specifically, in Steps 207-209, the edge server may calculate the number of reported errors. If the number of reported errors is too large (e.g., the number of reported errors reaches the second predefined number), it may be essentially determined that the front end optimization function is abnormal. Right after, a warning message regarding the loading item is sent to the administrator of the to-be-loaded page. The warning message may be sent to an administrator terminal in the form of an email.

In real applications, multiple user terminals may request the to-be-loaded page through the edge server, so the edge server may receive multiple reported errors from different user terminals. Because a page loading error may be caused by the compatibility problem of the front end optimization function, once such compatibility problem causes a loading error, not just one user terminal is affected. Therefore, when monitoring the number of reported errors, the number of reported errors from multiple user terminals may be added together.

It should be noted that, after sending the warning message to the administrator, multiple mechanisms may be followed, based on needs, to take additional actions.

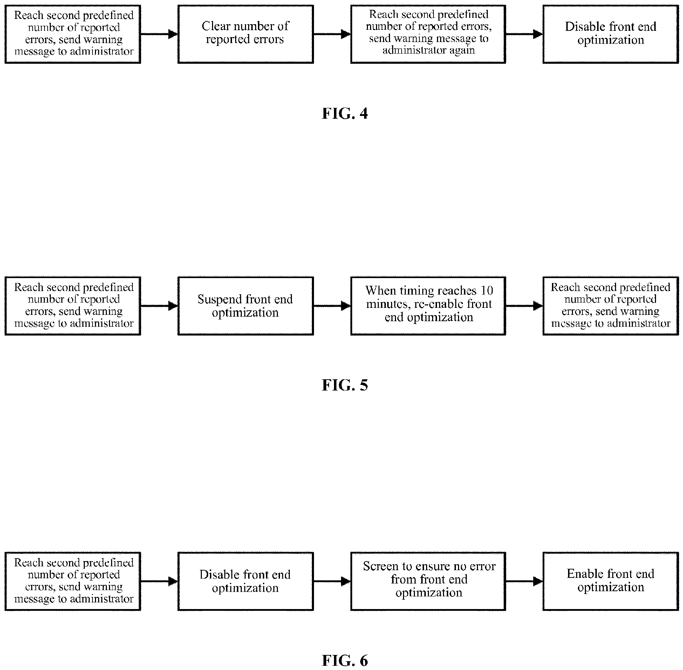

As a first mechanism, clear the number of reported errors for the loading item, and return to Step 208 after the number is cleared. That is, every time when the number of reported errors reaches the second predefined number, send a warning message to the administrator. Afterwards, the subsequent mechanism may be directly disenabling the front end optimization function after two warnings have been sent to the administrator, to avoid repeated warnings in a short time span. In real applications, a flowchart of the above warning mechanism may be as shown in FIG. 4.

As a second mechanism, when sending the warning message, suspend the front end optimization function. The suspension maintains for a predefined length of time. After the predefined length of time is reached, resume the front end optimization function. The predefined length of time may be set to 5-10 minutes. By suspending the front end optimization function, repeated error reports and the email storm caused by the repeated warnings in a short time span may be avoided. After the predefined length of time is reached, re-enable the front end optimization function. In the case that the front end optimization function is not disabled, restore the warning mechanism. In real applications, a flowchart of the above warning mechanism may be as shown in FIG. 5.

As a third mechanism, after sending the warning message, directly disable the front end optimization function. Wait for the administrator to screen the errors in the warning message. If it is determined that the errors are not caused by the front end optimization function, the front end optimization function may be then re-enabled afterwards. In real applications, a flowchart of the above warning mechanism may be as shown in FIG. 6.

In summary, based on needs, one of the above three mechanisms may be selected for implementation, or the mechanisms may be selected in combinations, details of which will not be provided here.

It can be seen that, the disclosed embodiment adds a warning mechanism, which allows the situations with possible errors to be reported to the administrator after temporarily bypassing the front end optimization function, for better error-screening and troubleshooting. The number of reported errors is recorded for the loading item. When the number of reported errors is too large, it may be determined that something is wrong with the front end optimization function, and thus it is necessary to report the situation to the administrator. The automatic detection and reporting mechanism ensures that a page is properly loaded, while at the same time also reduces human labour. Meanwhile, three warning mechanisms are provided to suspend or disable the front end optimization function, to ensure that no repeated warnings are reported in a short time span, thereby avoiding an email storm at the administrator side.

Embodiment 4 of the present disclosure relates to a webpage loading method. Embodiment 4 explains the invention. Embodiment 4 makes further improvements based on Embodiment 1, with the main improvement being: in Embodiment 4 of the present disclosure, detection of cookie-recorded information is added, to allow an automatic determination of whether to send the original loading list or the optimized loading list. The edge server may then send a loading list that fits the user terminal as soon as possible, thereby increasing the overall loading speed.

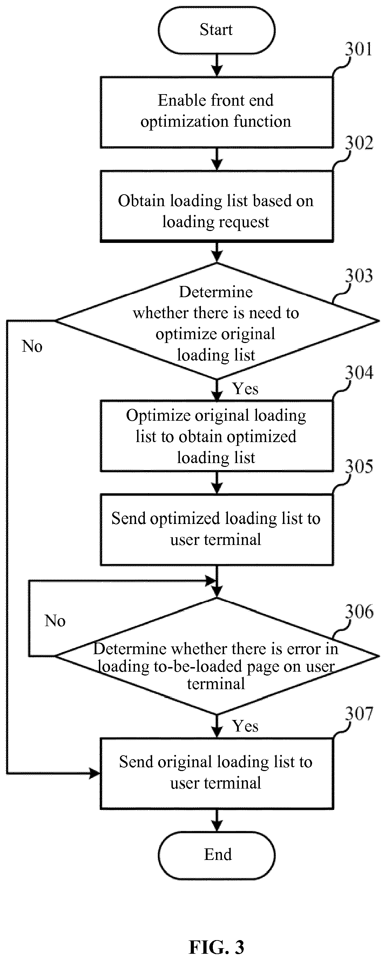

A flowchart of a webpage loading method consistent with the present embodiment, as shown in FIG. 3, is illustrated as follows.

Steps 301-302 in the disclosed embodiment are similar to Steps 101-102 in Embodiment 1, and will not be repeated again here.

Step 303: determine whether there is a need to optimize the original loading list; if it is determined that there is a need to optimize the original loading list, proceed to Step 304; if it is determined that there is no need to optimize the original loading list, proceed to Step 307.

Specifically, in this step, the determination is made based on the cookie-recorded information included in the page loading request. If the cookies indicate that the user terminal has previously received the original loading list due to a loading error, then the original loading list is sent directly to the user terminal, and steps for loading list optimization will no longer be performed.

Steps 304-307 in the disclosed embodiment are similar to Steps 103-106 in Embodiment 1, and will not be repeated again here.

It can be seen that in the disclosed embodiment, the cookie-recorded information is used to determine which type of loading list is the loading list that has been fed back. This facilitates quick acquisition of a proper loading list subsequently, thereby increasing the loading speed of the loading item and increasing the webpage's access speed.

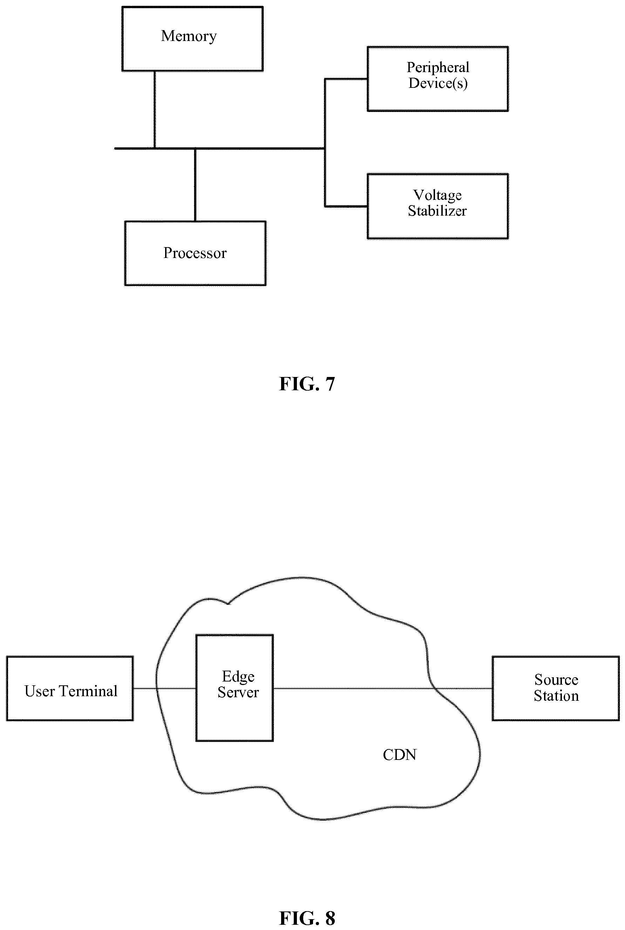

Embodiment 5 of the present disclosure explains the invention and relates to a server, as shown in FIG. 7, that includes:

at least one processor, and a memory that communicatively coupled to the at least one processor. The memory stores instructions that may be executed by the at least one processor. The instructions, when executed by the at least one processor, cause the at least one processor to implement any of the webpage loading methods described in Embodiment 4. The memory and the processors are connected by a bus, where the bus may include any number of interconnected buses and bridges. The bus connects the one or more processors and various circuits of the memory together. The bus may also connect a variety of other circuits together, such as peripheral devices, a voltage stabilizer, and power management circuits, all of which are well known in the relevant art, and will not be further described here. A bus interface provides an interface between the bus and a transceiver. The transceiver may comprise one component or multiple components, such as multiple receivers and transmitters, that provide units for communicating with a variety of other devices through the transmission media. Data processed by the processors is transmitted through an antenna over wireless media. Meanwhile, the antenna also receives and transmits data to the processors.

The processor(s) is responsible for bus management and routine processing, and may also provide various functions, including timing, peripheral interfaces, voltage regulation, power management, and other control functions. The memory may be used to store data used by the processor when performing certain operations.

Embodiment 6 of the present disclosure relates to a webpage loading system, as shown in FIG. 8, that specifically includes: a user terminal and the server disclosed in Embodiment 5, where the server may be an edge server under the CDN architecture. In real applications, the webpage loading system in the disclosed embodiment may also include a source station server to which a to-be-loaded webpage belongs.

Embodiment 7 of the present disclosure explains the invention and relates to a computer-readable storage medium that stores computer programs. The computer programs, when executed by a processor, implement the above disclosed Embodiment 4.

Persons with ordinary skill in the art should understand that all or part of the steps of the methods in the disclosed embodiments may be implemented through the computer programs that instruct relevant hardware. The computer programs are stored in a storage medium and include a plurality of instructions that are configured to allow a device (which may be a single chip microcomputer, a chip, etc.) or a processor to implement all or part of the steps of the methods in various embodiments of the present disclosure. The storage medium includes a flash drive, a mobile hard drive, ROM (Read-Only Memory), RAM (Random Access Memory), a magnetic disk, an optical disk, or any other medium that may store program code.

## Claims

1. A webpage loading method for application on an edge server in a content delivery network, comprising:
after enabling a front end optimization function, obtaining (102, 202, 302) an original loading list of a to-be-loaded page according to a page loading request from a user terminal, wherein the loading list is a HTML document; optimizing the original loading list to obtain an optimized loading list; sending the optimized loading list to the user terminal; determining whether there is an error in loading the to-be-loaded page on the user terminal; if there is an error in loading the to-be-loaded page on the user terminal, sending the original loading list to the user terminal;
receiving a page loading request for the to-be-loaded page from the user terminal;
determining (303), based on cookie-recorded information included in the page loading request, if the user terminal has previously received the original loading list due to a loading error;
if the user terminal has previously received the original loading list due to a loading error, sending (307) the original loading list to the user terminal;
if the user terminal has not previously received the original loading list due to a loading error, optimizing (103, 203, 304) the original loading list to obtain an optimized loading list and
sending (104, 204, 305) the optimized loading list to the user terminal.

2. The webpage loading method according to claim 1
wherein, optimizing the original loading list further includes adding a monitoring script to the original loading list; and
determining if there is an error in loading the to-be-loaded page on the user terminal further includes using the monitoring script to determine there is an error in loading the to-be-loaded page on the user terminal.

3. The webpage loading method according to claim 2, wherein:
the monitoring script is configured to, when it is determined that there is an error in loading the to-be-loaded page, send a loading error report to the edge server; and
determining if there is an error in loading the to-be-loaded page on the user terminal further includes, when the loading error report from the monitoring script is received, determining that there is an error in loading the to-be-loaded page on the user terminal.

4. The webpage loading method according to claim 2, wherein the loading error includes an incomplete display of the to-be-loaded page.

5. The webpage loading method according to claim 2, wherein determining if there is an error in loading the to-be-loaded page on the user terminal further includes:
determining if there is an error in loading the to-be-loaded page on the user terminal based on a number of loading requests receivedfor a same loading item from the user terminal under a first predefined period.

6. The webpage loading method according to claim 5, wherein determining if there is an error in loading the to-be-loaded page on the user terminal based on the number of loading requests received for the same loading item from the user terminal underthe first predefined period further includes:
if the number of loading requests receivedfor the same loading item from the user terminal under the first predefined period reaches a first predefined number, determiningthat there is an error in loading the to-be-loaded page on the user terminal.

7. The webpage loading method according to claim 1, further comprising:
when sending the original loading list to the user terminal, recording (207) one reported error for a loading item that has a reported error;
monitoring (207) the number of reported errors for the loading item; and
if the number of reported errors reaches a second predefined number, sending (209) a warning message for the loading item to an administrator of the to-be-loaded page, wherein the second predefined number is larger than the first predefined number.

8. The webpage loading method according to claim 7, wherein, after sending the warning message for the loading item to the administrator of the to-be-loaded page, the method further includes:
clearing the number of reported errors for the loading item; and
continuing to monitor the number of reported errorsfor the loading item.

9. The webpage loading method according to claim 7, further comprising:
when sending the warning message for the loading item to the administrator of the to-be-loaded page, suspending the front end optimization function.

10. The webpage loading method according to claim 9, after suspending the front end optimization function, the method further includes:
after suspending the front end optimization function consistently for a predefined length of time, re-enabling the front end optimization function.

11. The webpage loading method according to claim 7, further comprising:
when sending the warning message for the loading item to the administrator of the to-be-loaded page, disabling the front end optimization function.

12. The webpage loading method according to claim 1, wherein optimizing the original loading list further includes:
rewriting a to-be-accelerated resource in the original loading list according to a predefined optimization scheme.

13. A server, comprising:
at least one processor; and,
a memory communicatively coupled to the at least one processor; wherein:
the memory stores instructions executable by the at least one processor, and the instructions, when executed by the at least one processor, cause the at least one processor to implement any of the webpage loading methods according to claims 1-12.

14. A computer-readable storage medium storing computer programs, wherein the computer programs, when executed by a processor, implement any of the webpage loading methods according to claims 1-12.

## Patentansprüche

1. Eine Methode für das Laden einer Webseite für die Anwendung bei einem *Edgeserver* in einem Inhaltsbereitstellungsnetzwerk, die Folgendes umfasst:
Nach Ermöglichung einer Optimierungsfunktion einer Vorstufe zwecks Erhalt (102, 202, 302) einer Originalladeliste einer zu ladenden Liste übereinstimmend mit einer Seitenladeanforderung ab einem Benutzerterminal, wobei die Ladeliste ein HTML-Dokument ist; Optimierung der Originalladeliste zwecks Erhalt einer optimierten Ladeliste; Senden der optimierten Ladeliste zum Benutzerterminal; Bestimmung, ob ein Fehler beim Laden der zu ladenden Seite in das Benutzerterminal aufgetreten ist; wenn ein Fehler beim Laden der zu ladenden Seite im Benutzerterminal aufgetreten ist, Senden der Originalladeliste an das Benutzerterminal;
Empfang einer Seitenladeanforderung vom Benutzerterminal für die zu ladende Seite;
Bestimmung (303) basierend auf in der Seitenladeanforderung eingeschlossenen durch Cookies erfassten Information, wenn das Benutzerterminal vorher die Originalladeliste infolge eines Ladefehlers erhalten hat;
wenn das Benutzerterminal vorher die Originalladeliste infolge eines Ladefehlers erhalten hat, Senden (307) der Originalladeliste an das Benutzerterminal;
wenn das Benutzerterminal vorher nicht die Originalladeliste infolge eines Ladefehlers erhalten hat, Optimierung (103, 203, 304) der Originalladeliste zwecks Erhalt einer Optimierten Ladeliste und Senden (104, 204, 305) der optimierten Ladeliste an das Benutzerterminal.

2. Die Methode für das Laden einer Webseite gemäss Anspruch 1, bei der die Optimierung der Originalladeliste weiter das Hinzufügen eines Überwachungsscripts zur Originalladelistel und
Bestimmung, ob ein Fehler beim Laden der zu ladenden Seite ins Benutzerterminal aufgetreten ist, weiter die Anwendung des Überwachungsscript einschliesst, um festzustellen, dass ein Fehler beim Laden der in das Benutzerterminal zu ladenden Seite aufgetreten ist.

3. Die Methode für das Laden einer Webseite gemäss Anspruch 2, bei der
wenn festgestellt wird, dass ein Fehler beim Laden der zu ladenden Seite aufgetreten ist, das Überwachungsscript konfiguriert ist, um einen Ladefehlerbericht an den *Edgeserver* zu senden; und
die Feststellung, ob ein Fehler beim Laden der zu ladenden Seite am Benutzerterminal aufgetreten ist, weiter Folgendes einschliesst; wenn der Ladefehlerbericht vom Überwachungsskript eintrifft, Bestimmung, dass ein Fehler beim Laden der zu ladenden Seite am Benutzerterminal aufgetreten ist.

4. Die Methode für das Laden einer Webseite gemäss Anspruch 2, bei der der Ladefehler eine unvollständige Anzeige der zu ladenden Seite einschliesst.

5. Die Methode für das Laden einer Webseite gemäss Anspruch 2, bei der die Feststellung, ob ein Fehler beim Laden einer zu ladenden Seite im Benutzerterminal aufgetreten ist, weiter Folgendes einschliesst:
Bestimmung, ob ein Fehler beim Laden der zu ladenden Seite am Benutzerterminal basierend auf einer Anzahl von Ladeanforderungen aufgetreten ist, die für ein und dasselbe Ladeelement vom Benutzerterminal innerhalb einer ersten vorbestimmten Periode eingetroffen sind.

6. Die Methode für das Laden einer Webseite gemäss Anspruch 5, bei der die Bestimmung, ob ein Fehler beim Laden der zu ladende Seite am Benutzerterminal aufgetreten ist, basierend auf der empfangenen Anzahl von Ladeanforderungen für dasselbe Ladeelement vom Benutzerterminal innerhalb der ersten, vorbestimmten Periode, weiter Folgendes einschliesst:
Wenn die Anzahl vom selben Ladeelement vom Benutzerterminal innerhalb der ersten, vorbestimmten Periode empfangenen Ladeanforderungen eine erste, vorbestimmte Anzahl erreicht, Bestimmung, dass ein Fehler beim Laden der zu ladende Seite am Benutzerterminal aufgetreten ist.

7. Die Methode für das Laden einer Webseite gemäss Anspruch 1, die weiter Folgendes umfasst:
Wenn die originale Ladeliste an das Benutzerterminal gesandt wird, Aufzeichnung (207) eines mitgeteilten Fehlers für ein Ladeelement, für das der Fehler mitgeteilt wurde;
Überwachung (207) der Anzahl an mitgeteilten Fehlern für das Ladeelement; und
wenn die Anzahl von mitgeteilten Fehlern eine zweite, vorbestimmte Anzahl erreicht, Senden (209) einer Warnmeldung für das Ladeelement an einen Verwalter der zu ladende Seite, wobei die zweite, vorbestimmte Anzahl grösser ist als die erste vorbestimmte Anzahl.

8. Die Methode für das Laden einer Webseite gemäss Anspruch 7, bei der nach Senden der Warnmeldung für das Ladeelement an den Verwalter der zu ladende Seite, wobei die Methode weiter Folgendes einschliesst:
Bereinigung der Anzahl an mitgeteilten Fehlern für das Ladeelement; und
Fortfahren mit der Überwachung er Anzahl an mitgeteilten Fehlern für das Ladeelement.

9. Die Methode für das Laden einer Webseite gemäss Anspruch 7, die weiter Folgendes umfasst:
Wenn die Warnneldung für das Ladeelement an den Verwalter der zu ladende Seite gesandt wird, Unterbrechen des Frontend-optimierungsfunktion.

10. Die Methode für das Laden einer Webseite gemäss Anspruch 9, wobei die Methode nach Unterbrechen der Frontend-optimierungsfunktion weiter Folgendes einschliesst:
Nach entsprechender Unterbrechung der Frontend-optimierungsfunktion für eine vordefinierte Zeitspanne, erneute Freigabe der Frontend-optimierungsfunktion.

11. Die Methode für das Laden einer Webseite gemäss Anspruch 7, die weiter Folgendes umfasst:
Wenn die Warnmeldung für das Ladeelement zum Verwalter der zu ladenden Seite gesandt wird, Deaktivierung der Frontend-optimierungsfunktion.

12. Die Methode für das Laden einer Webseite gemäss Anspruch 1, bei der die Optimierung der Originalladeliste weiter Folgendes einschliesst:
Erneutes Schreiben einer zu beschleunigenden Ressource in der Originalladeliste übereinstimmend mit einem vorbestimmten Optimierungsschema.

13. Ein Server, der Folgendes umfasst:
Mindestens einen Prozessor; und
einen kommunikativ mit mindestens einem Prozessor verbundenen Speicher; wobei der Speicher Anweisungen speichert, die durch mindestens einen Prozessor ausführbar sind, und die Anweisungen, wenn sie durch den mindestens einen Prozessor ausgeführt werden, veranlassen den mindestens einen Prozessor irgendeine der Methoden für das Laden der Webseite gemäss Anspruch 1-12 zu implementieren.

14. Ein computerlesbares Speichermittel, das Computerprogramme speichert, wobei das Computerprogramm, wenn es durch einen Prozessor ausgeführt wird, irgendeine der Methoden für das Laden einer Webseite gemäss Anspruch 1-12 implementiert.

## Revendications

1. Méthode de chargement d'une page web pour application sur un serveur edge dans un réseau de diffusion de contenu, comprenant:
après avoir activé une fonction d'optimisation front-end, obtenir (102, 202, 302) une liste de chargement originale d'une page à charger en fonction d'une demande de chargement de page émanant d'un terminal utilisateur, la liste de chargement étant un document HTML; optimiser la liste de chargement originale afin d'obtenir une liste de chargement optimisée; envoyer la liste de chargement optimisée au terminal utilisateur; déterminer s'il y a une erreur dans le chargement de la page à charger sur le terminal utilisateur; s'il y a une erreur dans le chargement de la page à charger sur le terminal utilisateur, envoyer la liste de chargement originale au terminal utilisateur;
recevoir une demande de chargement de la page à charger de la part du terminal utilisateur;
déterminer (303), sur la base des informations enregistrées dans les cookies et incluses dans la demande de chargement de la page, si le terminal utilisateur a déjà reçu la liste de chargement originale en raison d'une erreur de chargement;
si le terminal utilisateur a déjà reçu la liste de chargement originale en raison d'une erreur de chargement, envoyer (307) la liste de chargement originale au terminal utilisateur;
si le terminal utilisateur n'a pas reçu précédemment la liste de chargement originale en raison d'une erreur de chargement, optimiser (103, 203, 304) la liste de chargement originale pour obtenir une liste de chargement optimisée et envoyer (104, 204, 305) la liste de chargement optimisée au terminal utilisateur.

2. Méthode de chargement de page web selon la revendication 1, dans laquelle l'optimisation de la liste de chargement originale comprend en outre l'ajout d'un script de surveillance à la liste de chargement originale; et
la détermination de l'existence d'une erreur dans le chargement de la page à charger sur le terminal utilisateur, comprenant en outre l'utilisation du script de surveillance pour déterminer qu'une erreur s'est produite dans le chargement de la page à charger sur le terminal utilisateur.

3. Méthode de chargement d'une page web selon la revendication 2, dans lequel:
le script de surveillance est configuré pour, lorsqu'il est déterminé qu'il y a une erreur dans le chargement de la page à charger, envoyer un rapport d'erreur de chargement au serveur edge; et
la détermination du fait qu'une erreur s'est produite dans le chargement de la page à charger sur le terminal utilisateur, comprenant en outre, lorsque le rapport d'erreur de chargement provenant du script de surveillance est reçu, la détermination du fait qu'une erreur s'est produite dans le chargement de la page à charger sur le terminal utilisateur.

4. Méthode de chargement d'une page web selon la revendication 2, dans lequel l'erreur de chargement comprend un affichage incomplet de la page à charger.

5. Méthode de chargement d'une page web selon la revendication 2, dans lequel la détermination de l'existence d'une erreur dans le chargement de la page à charger sur le terminal utilisateur comprend en outre:
déterminer s'il y a une erreur dans le chargement de la page à charger sur le terminal utilisateur en fonction du nombre de demandes de chargement reçues depuis le terminal utilisateur pour un même élément de chargement au cours d'une première période prédéfinie.

6. Méthode de chargement d'une page web selon la revendication 5, dans lequel la détermination d'une erreur dans le chargement de la page à charger sur le terminal utilisateur en fonction du nombre de demandes de chargement reçues du terminal utilisateur pour le même élément de chargement au cours de la première période prédéfinie comprend en outre:
si le nombre de demandes de chargement reçues en provenance du terminal utilisateur pour le même élément de chargement au cours de la première période prédéfinie atteint un premier nombre prédéfini, déterminer qu'il y a une erreur dans le chargement de la page à charger sur le terminal utilisateur.

7. Méthode de chargement d'une page web selon la revendication 1, comprenant en outre:
lors de l'envoi de la liste de chargement originale au terminal utilisateur, l'enregistrement (207) d'une erreur notifiée pour un élément de chargement pour lequel l'erreur a été notifiée;
la surveillance (207) du nombre d'erreurs notifiées pour l'élément de chargement; et
lorsque le nombre d'erreurs notifiées atteint un deuxième nombre prédéfini, l'envoi (209) à un administrateur de la page à charger d'un message d'avertissement concernant l'élément de chargement, le deuxième nombre prédéfini étant supérieur au premier nombre prédéfini.

8. Méthode de chargement d'une page web selon la revendication 7, dans lequel, après avoir envoyé à l'administrateur de la page à charger le message d'avertissement concernant l'élément de chargement, le procédé comprend en outre:
l'élimination du nombre d'erreurs notifiées pour l'élément de chargement; et
la poursuite de la surveillance du nombre d'erreurs notifiées pour l'élément de chargement.

9. Méthode de chargement d'une page web selon la revendication 7, comprenant en outre:
lors de l'envoi du message d'avertissement concernant l'élément de chargement à l'administrateur de la page à charger, la suspension de la fonction d'optimisation front-end.

10. Méthode de chargement d'une page web selon la revendication 9, le procédé comprenant en outre, après avoir suspendu la fonction d'optimisation front-end:
après avoir suspendu la fonction d'optimisation front-end de manière cohérente et pendant une période de temps prédéfinie, la réactivation de la fonction d'optimisation du front-end.

11. Méthode de chargement d'une page web selon la revendication 7, comprenant en outre:
lors de l'envoi à l'administrateur de la page à charger du message d'avertissement concernant l'élément de chargement, la désactivation de la fonction d'optimisation front-end.

12. Méthode de chargement d'une page web selon la revendication 1, dans lequel l'optimisation de la liste de chargement d'origine comprend en outre:
la réécriture d'une ressource à accélérer dans la liste de chargement originale selon un schéma d'optimisation prédéfini.

13. Serveur, comprenant ce qui suit :
au moins un processeur; et,
une mémoire couplée de manière communicative à l'au moins un processeur;
où:
la mémoire stocke des instructions exécutables par le au moins un processeur, et les instructions, lorsqu'elles sont exécutées par l'au moins un processeur, amènent le au moins un processeur à mettre en oeuvre l'une quelconque des procédures de chargement de pages web selon les revendications 1 à 12.

14. Support d'enregistrement lisible par ordinateur contenant des programmes informatiques, où lesdits programmes informatiques, lorsqu'ils sont exécutés par un processeur, mettent en oeuvre l'un quelconque des procédés de chargement de la page web selon les revendications 1 à 12.
